# EUROPÄISCHE PATENTSCHRIFT

(11) **EP 4 022 404 B1**
(45) Veröffentlichungstag und Bekanntmachung des Hinweises auf die Patenterteilung: **10.12.2025**
(21) Anmeldenummer: 20797374.4
(22) Anmeldetag: 06.10.2020
(51) Int. Cl.: G05B 19/042

(54) **SYSTEM UND VERFAHREN ZUR ADMINISTRATION VON ANTRIEBSKOMPONENTEN**
SYSTEM AND METHOD FOR ADMINISTRATION OF DRIVE COMPONENTS
SYSTÈME ET PROCÉDÉ D'ADMINISTRATION DE COMPOSANTS D'ENTRAÎNEMENT

(30) Priorität: 06.11.2019 EP 19207330
(43) Veröffentlichungstag der Anmeldung: 06.07.2022
(73) Patentinhaber: Siemens Aktiengesellschaft, 80333 München (DE)
(72) Erfinder: HEINEMANN, Gerhard, 91058 Erlangen (DE)
(74) Vertreter: Siemens Patent Attorneys
(86) Internationale Anmeldenummer: PCT/EP2020/077930
(87) Internationale Veröffentlichungsnummer: WO 2021/089261

(56) Entgegenhaltungen:
- CN-A- 105 162 887
- CN-A- 109 683 546
- DE-A1- 102015 208 750
- US-A1- 2014 282 015
- US-A1- 2015 277 399
- US-A1- 2017 074 589

## Beschreibung

Die Erfindung betrifft ein System zur Administration von Antriebskomponenten. Ferner betrifft die Erfindung ein Verfahren zur Administration von Antriebskomponenten.

Antriebskomponenten, beispielsweise elektrische Antriebe in automatisierten Maschinen sollen möglichst eigenständig und zuverlässig die für sie vorgesehenen Anwendungen ausführen. Der möglichst eigenständige Betrieb der Antriebskomponente kann über Cloud-basierte Dienste überwacht und analysiert werden. Cloud-basierte Dienste stellen hierbei Anwendungen dar, die über eine fremde, über das Internet, verfügbare IT-Infrastruktur bereitgestellt werden können. Weitergehende Möglichkeiten für Cloud-basierte Dienste stellen Firmware-Updates für die in der Maschine verbauten Antriebskomponenten, sowie das Starten von Diagnose- und Optimierungsfunktionen dar. Diese Anwendungen können jedoch den Betriebsablauf der Maschine stören oder sogar zu Schäden an der Maschine oder Personen führen, wenn Anwendungen über die Cloud in die Maschine eingespielt werden und/oder Änderungen an bestehenden Anwendungen vorgenommen werden. Besonders problematisch ist dabei, dass in der Cloud eventuell nicht der komplette und aktuelle lokale Zustand, der sogenannte Maschinenkontext, der Maschine oder einer Antriebskomponente der Maschine zur Verfügung steht. Insbesondere sind nicht immer Informationen über den aktuellen Fahrzustand der Maschine oder des Werkzeuges, sowie der Bearbeitungszustand des Werkstückes verfügbar, oder ob sich Personen im Zugriffsbereich bzw. Arbeitsbereich der Maschine befinden, was gegebenenfalls zu Mensch-Maschine-Kollisionen führen würde. Zusätzlich zu dem nicht bekannten Maschinenkontext kommt erschwerend hinzu, dass Vorgänge, wie beispielsweise das Einspielen neuer Anwendungen eine Autorisierung durch entsprechendes Fachpersonal erforderlich macht. Zudem sind aufgrund von Gefährdung der Sicherheit hohe Anforderungen an die Cyber-Security zu berücksichtigen. Aus den genannten Gründen werden derartige Cloud-basierte Eingriffe in die Maschinenfunktion von automatisierten Maschinen derzeit in der Regel strikt unterbunden.

In bekannten Szenarios werden entsprechende Handlungen durch entsprechendes Fachpersonal durchgeführt, das vor Ort an der automatisierten Maschine einen Überblick über den Maschinenkontext hat und entsprechend qualifiziert und autorisiert ist und somit beispielsweise Zugangsberechtigungen zu der Maschine, Schlüssel für Schaltschränke und Bedienpanels und Kenntnis von Passwörtern hat.

Weiterhin können entsprechende Handlungen über einen Remote-Zugang ausgeführt werden. Diese Vorgehensweise setzt aber zusätzlich eine Kontaktperson an der Maschine voraus, welche Auskunft über den aktuellen Maschinenkontext bereitstellt. Diese Kontaktperson muss die notwendigen Informationen über den Maschinenkontext an den entsprechenden Bediener, welcher den Remote-Zugang bedient, weitergeben.

Die bekannten Lösungen stellen eine ineffiziente Möglichkeit zum Administrieren von Antriebskomponenten in automatisierten Maschinen dar, da eine manuelle und vor Ort durchgeführte und somit Zeit- und Personalaufwendige Überwachung erfolgen muss. Zudem muss die automatisierte Maschine und/oder entsprechend zu administrierende Antriebskomponenten der Maschine überwacht und deren Zustand kommuniziert werden.

Weiterhin muss die automatisierte Maschine in einen spezifischen Zustand geschaltet werden, der ein Administrieren ohne Störungen und Beschädigungen der automatisierten Maschine zulässt. Dies führt zu Stillständen der Maschine bzw. Ausfallzeiten in der Produktion und verringert somit die effektive Nutzungszeit.

Es besteht daher ein Bedarf an einem Mechanismus zur Administration von Antriebskomponenten. Ausgehend vom aufgezeigten Stand der Technik und dem sich daraus ergebenden Bedarf, hat sich die vorliegende Erfindung zur Aufgabe gestellt, eine Lösung zu schaffen, die die im Stand der Technik bekannten Nachteile zumindest teilweise überwindet.

Diese Aufgabe wird durch die Merkmale des Anspruchs 1 gelöst.

Gemäß einem ersten Aspekt betrifft die vorliegende Erfindung ein System zur Administration von Antriebskomponenten. Vorzugsweise umfasst das System eine Vielzahl an Antriebskomponenten.

Im Sinne der vorliegenden Erfindung umfasst eine Administration einen technischen Betrieb der Antriebskomponenten und/oder eine Ausführung von Maßnahmen zum Betreiben von Antriebskomponenten. Insbesondere umfasst eine Administration ein Bereitstellen von neuen Hardware- und/oder Softwarefunktionen der Antriebskomponente, wobei die Hardwarefunktionen in Software umgesetzt sein können.

Die Antriebskomponente umfasst eine Antriebsrecheneinheit. Die Antriebskomponente kann als ein elektrischer Antrieb ausgebildet sein. Der elektrische Antrieb kann einen Gleichstromantrieb oder einen Wechselstromantrieb umfassen. Die Antriebsrecheneinheit ist als eine Recheneinheit mit einem flüchtigen und/oder nichtflüchtigen Speicher, wenigstens einem Prozessor und Kommunikationsschnittstellen zur Kommunikation mit der Antriebskomponente und/oder gleichen oder übergelagerten Komponenten ausgebildet. Ferner kann die Antriebsrecheneinheit Kommunikationsschnitten zur Kommunikation mit weiteren Geräten und/oder Einheiten aufweisen. In einer Ausführungsform weist die Antriebskomponente ein Anzeige-/Bedienelement zur Kommunikation mit Fachpersonal auf, welches über eine Kommunikationsschnittstelle mit der Antriebsrecheneinheit zur Kommunikation verbunden ist. Die Kommunikationsschnittstellen können für eine kabelgebundene und/oder kabellose Kommunikation ausgebildet sein. Insbesondere kann die Antriebsrecheneinheit als ein Umrichter ausgebildet sein.

Die Antriebsrecheneinheit ist dazu konfiguriert, ein in Spannung, Strom und/oder Frequenz veränderbares Ansteuersignal für die Antriebskomponente bereitzustellen.

Auf der Antriebsrecheneinheit ist eine Antriebs-Software zum Betreiben der Antriebskomponente ausführbar durch die Antriebsrecheneinheit gespeichert. Die Antriebssoftware weist eine spezifische Software-Version auf. Eine Software-Version stellt hierbei ein definiertes Entwicklungsstadium der Software der Antriebskomponente mit allen dazugehörigen Komponenten dar. Verschiedene Versionen stellen die Veränderung und Weiterentwicklung einer Software oder eines Teils über eine bestimmte Zeit dar, welche eine gemeinsame historische Basis aufweisen. Die historische Basis umfasst die Major-Version. So können Systeme zur Versionierung genutzt werden, um neuere Ausgaben einer Software von einer älteren zu unterscheiden. Die Antriebssoftware umfasst zudem Parameter zum Einstellen und/oder Anpassen der Antriebskomponenten auf entsprechende Anwendungen und/oder Einsatzszenarien. Die Antriebssoftware und/oder die Parameter können durch entsprechende Updates/Upgrades geändert oder aktualisiert werden.

Ferner weist das System mindestens eine Recheneinheit auf. Die Recheneinheit ist in Kommunikation mit der Antriebsrecheneinheit der Antriebskomponente. Die Kommunikation erfolgt über eine Kommunikationsschnittstelle. Die Kommunikationsschnittstelle kann als ein Feldbus ausgebildet sein. Ein Feldbus stellt ein Bussystem dar, dass in einem Feld Feldgeräte, beispielsweise Antriebskomponenten in einem Automatisierungssystem zwecks Kommunikation mit einem Automatisierungsgerät verbindet.

Die Recheneinheit ist dazu konfiguriert, einen Ist-Betriebszustand der Antriebskomponente zu erfassen. Der Ist-Betriebszustand stellt den aktuell ermittelten Zustand der Antriebskomponente dar. Dieser kann beispielsweise über Sensorsignale und über den Programmablauf der aktuell auszuführenden Anwendung erfasst werden. Der Ist-Betriebszustand kann hierbei den operativen Betriebszustand zur Ausführung einer Anwendung, einen Wartezustand oder eine Bewegung von einem Zustand in einen anderen Zustand umfassen.

In Abhängigkeit von dem erfassten Ist-Betriebszustand ist die Recheneinheit konfiguriert mindestens einen Service-Betriebszustand für die Antriebskomponente anzuwählen. Ein Service-Betriebszustand stellt hierbei einen spezifischen und bekannten Zustand der Antriebskomponente dar, welcher das Ausführen von Anwendungen an der Antriebskomponente zulässt, ohne eine Beschädigung an der Antriebskomponente und/oder weiterer in dem Umfeld der Antriebskomponente befindlicher Antriebkomponenten darzustellen. Insbesondere ist die Recheneinheit konfiguriert mindestens einen Service-Betriebszustand für die Antriebskomponente in Abhängigkeit von dem erfassten Ist-Betriebszustand und des Maschinen- bzw. Anlagenkontextes anzuwählen. Unter dem Maschinenkontext ist die Kenntnis zu verstehen, die eine Maschine und/oder Steuerung über die mit ihr in Verbindung stehenden Komponenten hat, umfassend die Kenntnis über entsprechende Bewegungen bzw. Bewegungen mit Bezug zu bestimmten Funktionen, über Einsatzzeiten und Ruhezeiten usw.

Ferner weist das System ein verteiltes Rechensystem auf. Das verteilte Rechensystem kann als Cloud-Computing ausgebildet sein. Das Cloud-Computing bildet eine IT-Infrastruktur ab, welche über das Internet verfügbar ist. Diese IT-Infrastruktur beinhalt Speicherplatz, Rechenleistung oder Anwendungssoftware. Das verteilte Rechensystem kann als ein Rechnerverbund oder als ein lokaler Einzelrechner verstanden werden, auf welche über eine Kommunikationsschnittstelle, beispielsweise über ein drahtgebundenes und drahtloses Netzwerk zugegriffen werden kann.

Das verteilte Rechensystem steht in Kommunikation mit der Antriebsrecheneinheit der Antriebskomponente und ist konfiguriert, in Abhängigkeit des angewählten Service-Betriebszustandes der Antriebskomponente, ein Durchführen der Administration der Antriebskomponente auszulösen.

Es ist erkannt worden, dass zum Ausführen von Administrationsanwendungen über eine Remoteverbindung, zusätzliches Fachpersonal lokal, vor Ort an der Maschine und/oder an der Antriebskomponente sein muss, welches einen bestimmten Kenntnisstand über die Maschine und/oder Antriebskomponente hat und zusätzlich entsprechende Berechtigungen zur Administration aufweist. Für eine einfache Maschine mit einer geringen Anzahl an Antriebskomponenten kann diese Funktion durch einen einzelnen Fachmann übernommen werden. In einem Maschinenpark mit einer Vielzahl an Antriebskomponenten, welche eventuell in einer bestimmten Funktion zu einander stehen, kann die Funktion durch einen einzelnen Fachmann nicht mehr abgedeckt werden bzw. wird so umfangreich, dass ein Administrieren nicht effizient ausgeführt werden kann. Über die vorliegende Erfindung kann aus der Cloud heraus ein OEM und/oder ein Maschinenhersteller Antriebskomponenten weltweit Administrieren, beispielsweise neue Software aufspielen, ohne dass es einen Fachmann vor Ort an der Maschine bedarf. Es wird nur abgefragt, welche Maschinen bzw. Antriebskomponenten weisen einen passenden Betriebszustand bzw. einen Service-Betriebszustand auf und spielt entsprechende Upgrades effizienter und schneller ein, verändert Parameter und/oder konfiguriert Antriebskomponenten schneller und effizienter. Weiterhin können Testbewegungen durchgeführt werden, um an dem Verhalten der Maschine als Ganzes zu erkennen, ob eine Wartung notwendig ist.

In vorteilhafter Weise wird durch die vorliegende Erfindung vorgebeugt, dass für ein Administrieren keine zusätzliches Service-Personal notwendig ist, so dass zusätzliche Wartezeiten und Kosten entfallen. Die Service-Operationen können voll-automatisiert von der Cloud-Anwendungen (App) gesteuert werden oder teil-automatisiert durch einen Service-Experten, beispielsweise aus der Zentrale eines OEM. Vor Ort ist allenfalls eine Maschinen-Bediener erforderlich.

Weiterhin ist von Vorteil, dass die Service-Operationen in den programmierten Warte- oder Stillstands-Zeiten der Maschine ausgeführt werden und führen nicht zu einer Beeinträchtigung des normalen (operativen) Betriebs. In der Cloud kann an Hand der noch zur Verfügung stehenden Zeitdauer im Zeitfenster überprüft werden, ob die geplanten Service-Anwendungen aus der Cloud noch sinnvoll abgeschlossen werden können. Die Freigaben verfallen automatisch nach Ablauf der konfigurierten Zeitdauer, welche einem Zeitfenster zur Administration entspricht, so dass die Cyber-Security gesteigert wird.

Zudem erlaubt die Vorgabe eines definierten Betriebszustandsmodells für IoT (Internet der Dinge) -Zugriffe in eine einzelne Antriebskomponente die Programmierung universeller Service-Anwendungen in der Cloud oder einer Edge-Box für alle Antriebskomponenten, unabhängig von den technologischen Randbedingungen in der Anlage bzw. Maschine.

Durch das System und das Verfahren gemäß der vorliegenden Erfindung können neue Anwendungen ausgeführt werden, die beispielsweise automatisierte Sicherheits-Updates, Analyse des aktuellen Antriebsverhaltens und darauf basierend Angebote zur Antriebsoptimierung an den Betreiber der Anlage umfassen. In vorteilhafter Weise muss kein zusätzliches Fachpersonal vor Ort eingesetzt werden, womit die Service-Anwendungen effizienter und kostengünstiger ausgeführt werden können.

Zudem ist von Vorteil, dass ein einzuhaltender Ablauf definiert wird, der sicherstellt, dass keine Gefährdung von Menschen oder Maschine auftreten kann.

Gemäß einer Ausführungsform umfasst der mindestens eine Service-Betriebszustand einen spezifischen und bekannten Zustand der Antriebskomponente. Der Service-Betriebszustand entspricht nicht einem operativen Betriebszustand der Antriebskomponente. Der spezifische und/oder bekannte Zustand der Antriebskomponente beinhaltet einen Zustand, in dem die Antriebskomponente gefahrlos für Menschen und/oder weitere Maschinen in dem Zugriffsbereich über Remote manipuliert werden kann. Beispielsweise kann eine Testbewegung getriggert werden, welche abgefahren wird, ohne hierbei den Verlauf der Testbewegung vor Ort zu überwachen, um das Risiko einer Kollision zu verringern. Vielmehr ist über den Service-Betriebszustand garantiert, dass eine Service-Operation freigegeben und durchgeführt werden kann.

Gemäß einer weiteren Ausführungsform umfasst das Administrieren der Antriebskomponente Service-Operationen an der Antriebs-Software zum Betreiben der Antriebskomponente und/oder Service-Operationen zur Inbetriebnahme/Wartung der Antriebskomponente. Diese Service-Operationen können während der Service-Betriebszustände ausgeführt werden. Neue Antrieb-Software, beispielsweise durch Firmware-Updates und/oder Parameter-Veränderungen können vorgenommen werden und deren Funktionalität kann getestet werden. Zudem können bestimmte Testbewegungen zur Inbetriebnahme der neuen Antriebs-Software und/der Parameter-Veränderungen durchgeführt werden, um die geänderten Eigenschaften der Antriebskomponenten zu überprüfen. Zudem können Wartungsläufe durchgeführt werden, um beispielsweise Verschleiß an der Maschine und/oder den Antriebskomponenten zu identifizieren. Diese Maßnahmen können unabhängig der operativen Betriebszustände und ohne Störung dieser ausgeführt werden.

Gemäß einer weiteren Ausführungsform werden die Service-Operationen über das verteilte Rechensystem abgefragt und bereitgestellt. Das verteile Rechensystem, beispielsweise eine Cloud stellt entsprechende Anwendungen (Apps) zur Verfügung, welche auf den Antriebskomponenten zum Einsatz gelangen.

Gemäß einer weiteren Ausführungsform beträgt (oder: dauert) der Service-Betriebszustand eine konfigurierbare Zeitdauer. Die konfigurierbare Zeitdauer gibt an, wann ein Wechsel aus dem Service-Betriebszustand der Antriebskomponente in den operativen Betriebszustand der Antriebskomponente erfolgt. Somit können die Service-Betriebszustände beispielsweise in die normalen, betriebsbedingten Stillstands-Zeiten der Maschine und/oder Antriebskomponente gelegt werden. Die Service-Zustände werden über die Recheneinheit Programm-gesteuert angewählt und werden mit einer konfigurierbaren Zeitdauer bzw. mit einem Zeitfenster versehen. Die konfigurierbare Zeitdauer gibt die Zeit eines Zustandes der Antriebskomponente an, bevor diese wieder in den normalen und/oder operativen Betriebszustand wechselt. Die konfigurierbare Zeitdauer kann für jeden Service-Betriebszustand über die Recheneinheit mit einer unterschiedlichen Zeit konfiguriert werden. Das Konfigurieren erfolgt beispielsweise durch eine Analyse des Programmablaufs, welcher angibt, wann für die Antriebskomponente eine neue Anwendung und somit ein Wechsel aus einem Ruhezustand in den operativen Betriebszustand erfolgt.

Gemäß einer weiteren Ausführungsform ist die Recheneinheit als eine speicherprogrammierbare Steuerung (SPS) ausgebildet. Gemäß einer weiteren Ausführungsform ist die Recheneinheit als eine computergestützte numerische Steuerung (CNC) ausgebildet. Die Recheneinheit hat Kenntnis über den vollständigen Ablauf des Programms zum Betrieb der Antriebskomponente und kann somit entsprechende Service-Betriebszustände mit einer entsprechenden Zeitdauer bereitstellen bzw. festlegen.

Gemäß einer weiteren Ausführungsform werden für den Service-Betriebszustand Authentifikations-Anforderungen zur Zugriffsteuerung auf die Antriebsrecheneinheit der Antriebskomponente über die Recheneinheit bereitgestellt und von dem verteilten Rechensystem für den Zugriff abgefragt. In vorteilhafter Weise können für die verschiedenen Service-Betriebszustände Authentifikations-Anforderungen für das User Management & Access Control System (UMAC) der Antriebskomponente hinterlegt werden, welche für das Ausführen der zugehörigen Service-Operation erforderlich sind. Somit kann garantiert werden, dass nur Remote-Controller und/oder Service-Anwendungen Zugriff auf die Antriebskomponente erhalten, welche dazu berechtigt sind. Der Schutz vor unbefugter Manipulation wird verbessert. Nach einer entsprechenden Authentisierung können die Service-Betriebszustände und ihre verbleibende Zeitdauer von den Cloud-Anwendungen abgefragt werden und die Service-Operationen aus der Cloud heraus gestartet werden.

Gemäß einer weiteren Ausführungsform sind den Authentifikations-Anforderungen Anwenderrollen zugeordnet. Die Authentifikations-Anforderungen schalten den Zugriff auf die Antriebsrecheneinheit der Antriebskomponente entsprechend der Rolle frei. Über die Anwenderrollen können verschiedene Stufen des Zugriffs für Remote-Controller und Anwendungen bereitgestellt werden, welche eine unterschiedliche Tiefe des Zugriffs und somit das Ausführen von unterschiedlichen Änderungen gewähren.

Gemäß einer weiteren Ausführungsform wird auf einem Anzeige-/Bedienelement eine Betriebsmeldung ausgegeben, wenn der Ist-Betriebszustand der Antriebskomponente keine Anwahl eines Service-Betriebszustand für die Antriebskomponente ermöglicht. Gemäß einer weiteren Ausführungsform erfolgt durch Anwahl über ein externes Freigabesignal ein Wechsel aus dem operativen Betriebszustand in den Service-Betriebszustand. Sofern der lokale Maschinenkontext trotzdem keine sichere Ausführung der Service-Operation in den jeweiligen Service-Zuständen zulässt, kann zusätzlich die Abfrage einer lokalen und manuellen Freigabe der Service-Operationen in den jeweiligen Zuständen ausgegeben und/oder angezeigt werden. Hierfür kann eine in der Cloud-Anwendung definierte Betriebsmeldung über die Antriebskomponente ausgegeben. Die Betriebsmeldung kann über das Anzeige-/Bedienelement, beispielsweise ein Touch-Display, ein Eingabepanel mit integriertem Bildschirm und/oder PC oder Handheld, welches mit der Antriebskomponente und/oder der Maschine verbunden ist ausgegeben werden. Über das Anzeige-/Bedienelement kann ein Bediener aufgefordert werden, eine manuelle Freigabe, beispielsweise ein externes Eingabesignal durch Betätigen einer Taste oder eines Schlüsselschalter einzustellen. Durch die Freigabe des Service-Betriebszustandes kann die Sicherheit erhöht werden.

Gemäß einer weiteren Ausführungsform weist das verteilte Rechensystem eine Logging-Vorrichtung zum Protokollieren einer Zustandsänderung und/oder einer Service-Operation auf. In vorteilhafter Weise können somit alle Zustandsänderungen und Operationen aus dem verteilten Rechensystem (Cloud) heraus über die Logging-Vorrichtung protokolliert werden, so dass diese jederzeit zweifelsfrei nachvollziehbar sind. In einer alternativen Ausführungsform kann die Logging-Vorrichtung in der Antriebskomponente vorgesehen sein. Durch das Protokoll können bei auftretenden Problemen die vorgenommenen Zustandsänderungen und ausgeführten Service-Operationen nachvollzogen und entsprechend zur Problembeseitigung korrigiert bzw. zurückgesetzt werden.

Gemäß einem zweiten Aspekt betrifft die Erfindung ein Verfahren zur Administration von Antriebskomponenten mit einer Antriebsrecheneinheit, wobei auf der Antriebsrecheneinheit eine Antriebssoftware zum Betreiben der Antriebskomponente ausführbar durch die Antriebsrecheneinheit gespeichert ist. Das Verfahren umfasst die folgenden Schritte:
- Erfassen eines Ist-Betriebszustandes einer Antriebskomponente und Anwählen in Abhängigkeit von dem erfassten Ist-Betriebszustand mindestens eines Service-Betriebszustandes für die Antriebskomponente durch eine Steuereinheit;
- Durchführen der Administration der Antriebssoftware zum Betreiben der Antriebskomponente, in Abhängigkeit von dem angewählten Service-Betriebszustand der Antriebskomponente durch ein verteiltes Rechensystem.

In einer Ausführungsform erfolgt ein Erfassen des Ist-Betriebszustandes einer Antriebskomponente und ihres Maschinen- bzw. Anlagen-Kontextes. In vorteilhafter Weise liegen somit Kenntnisse über weitere Komponenten und beispielsweise deren Bewegungen vor, welche zusätzlich berücksichtigt werden können, um einen Service-Betriebszustand anzuwählen. Somit stehen präzisere Information zur Verfügung.

Die vorstehend beschriebene Ausführungsform des Verfahrens kann auch als ein Computerprogramm ausgebildet sein, wobei ein Computer zur Durchführung des oben beschriebenen Verfahrens veranlasst wird, wenn das Computerprogramm auf einem Computer bzw. auf einem Prozessor des Computers ausgeführt wird. Das Computerprogramm kann als Signal per Download bereitgestellt oder in einer Speichereinheit des Computers oder der Administratoreinheit mit darin enthaltenem computerlesbarem Programmcode gespeichert werden, um ein elektronisches Gerät, z. B. einen Server, zur Ausführung von Anweisungen gemäß dem oben genannten Verfahren zu veranlassen. Dabei kann das Computerprogramm auch auf einem maschinenlesbaren Speichermedium gespeichert sein. Eine alternative Aufgabenlösung sieht ein Speichermedium vor, das zur Speicherung des vorstehend beschriebenen, computer-implementierten Verfahrens in Form von Programmcode bestimmt ist und von einem Computer oder Prozessor lesbar ist.

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Darstellung einer Ausführungsform eines Systems zur Administration von Antriebskomponenten;
- Fig. 2: ein Ablaufdiagramm gemäß einer Ausführungsform des erfindungsgemäßen Verfahrens.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

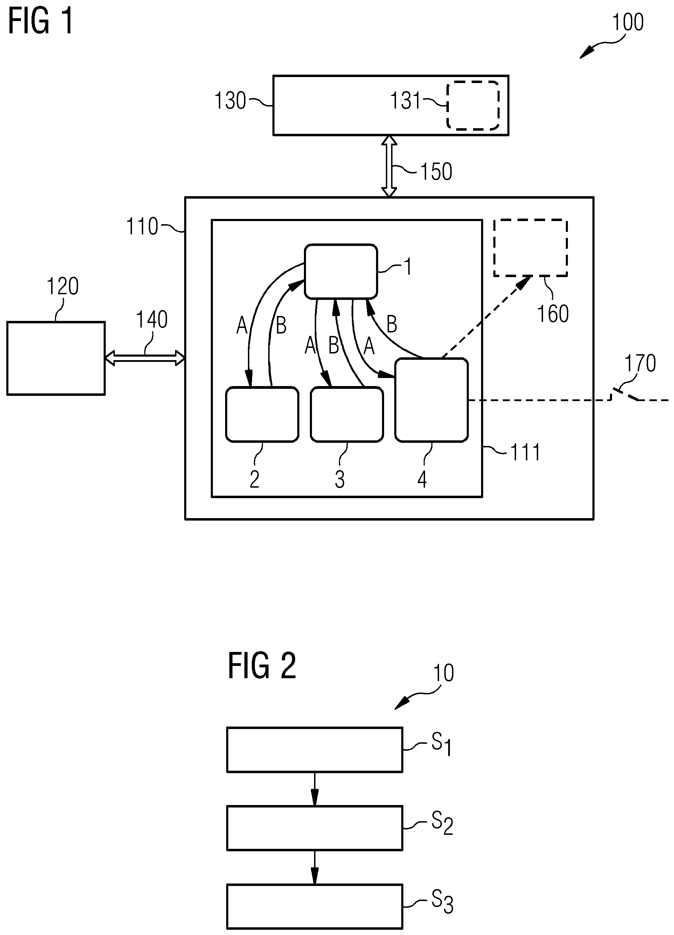

Fig. 1 zeigt eine schematische Darstellung einer Ausführungsform eines Systems zur Administration von Antriebskomponenten 110. Das System 100 umfasst mindestens eine Antriebskomponente 110. Die Antriebskomponente 110 kann eine Komponente einer Maschine des Systems 100 sein. Diesbezüglich kann das System 100 eine Vielzahl an Antriebskomponenten 110 aufweisen, welche einer Maschine oder mehreren Maschinen angehören. Die Antriebskomponente 100 kann einen Gleichstromantrieb oder einen Wechselstromantrieb umfassen. Die Antriebskomponente 110 weist eine Antriebsrecheneinheit 111, vorzugsweise einen Antriebsumrichter zum Betrieb der Antriebskomponente 110 auf. Auf der Antriebsrecheneinheit 111 ist eine Antriebs-Software zum Betreiben der Antriebskomponente 110 ausführbar durch die Antriebsrecheneinheit 111 gespeichert. Die Antriebsrecheneinheit 111 stellt ein in Spannung, Strom und/oder Frequenz veränderbares Steuersignal zum Ansteuern der Antriebskomponente 110 bereit. In einer Ausführungsform kann die Antriebskomponente ein Anzeige-/Bedienelement 160 aufweisen. Das Anzeige-/Bedienelement 160 kann als ein Touchpanel, Operatorpanel mit Eingabeeinheit, beispielsweise eine Maus und/oder Tastatur und einer Ausgabeeinheit, beispielsweise einem Monitor ausgebildet sein. Weiterhin ist denkbar, dass das Anzeige/Bedienelement 160 als ein PC oder Handheld ausgebildet ist, welches über eine Kommunikationsschnittstelle mit der Antriebskomponente 110 kommuniziert.

Weiterhin umfasst das System 100 eine Recheneinheit 120. Die Recheneinheit 120 kommuniziert über eine Kommunikationsschnittstelle 140 mit der Antriebskomponente 110. Die Kommunikationsschnittstelle 140 kann als ein Feldbus ausgebildet sein. Zwischen der Recheneinheit 120 und der Antriebskomponente 110 erfolgt eine zyklische Kommunikation. Über die zyklische Kommunikation kann beispielsweise ein Attribut übertragen werden, welches den operativen Betriebszustand der Antriebskomponente 110 definiert. Zudem kann über die zyklische Kommunikation ein Event verschickt werden, welches einen Wechsel in einen bestimmten Zustand, beispielsweise einen Service-Betriebszustand 2, 3, 4 veranlasst. Über einen Feldbus werden in vorteilhafter Weise beide Kommunikationsrichtungen mit unterschiedlichen Daten gewährleistet. Der Feldbus kann beispielsweise als Ethernet oder RS485 als physische Schichten zur Kommunikation ausgebildet sein. Weiterhin können Implementierungen, wie beispielsweise Profinet basierend auf Ethernet, Modbus basierend auf RS485 (Modbus-RTU) oder Ethernet (Modbus/TCP) oder Profibus auf Basis von RS485 vorgesehen sein. Die Recheneinheit 120 kann als eine speicherprogrammierbare Steuerung oder als eine CNC-Steuerung bzw. als eine Anlagensteuerung ausgebildet sein. Die Recheneinheit 120 kann als eine einzelne Hardwarekomponente implementiert werden oder als eine Softwareinstanz auf einen Computer oder gehostet in der Cloud implementiert werden.

Die Recheneinheit 120 kann diesbezüglich als eine Recheneinheit mit einem flüchtigen und/oder nichtflüchtigen Speicher, wenigstens einem Prozessor und Kommunikationsschnittstellen zur Kommunikation mit der Antriebskomponente 110 ausgebildet sein. Ferner kann die Recheneinheit 120 Kommunikationsschnitten zur Kommunikation mit weiteren Geräten beispielsweise für die Bedienung aufweisen. Die Kommunikationsschnittstellen können für eine kabelgebundene und/oder kabellose Kommunikation ausgebildet sein.

Über die Recheneinheit 120 werden entsprechende Service-Betriebszustände Programm-gesteuert angewählt und mit einer konfigurierbaren Zeitdauer zur Ausführung versehen. Die konfigurierbare Zeitdauer gibt an, wann die Antriebskomponente 110 wieder in den operativen Betriebszustand wechselt. Hierfür können entsprechende Sensordaten der Antriebskomponente 110, die eine entsprechende Lage der Antriebskomponente detektieren, ausgewertet werden. Weiterhin können entsprechende Ansteuersignale und der Programmablauf zur Ansteuerung der Antriebskomponente 110 analysiert werden, um entsprechende Service-Betriebszustände 2, 3, 4 zu ermitteln und mit einer Zeitdauer zu konfigurieren. Die Aktivierung der Service-Betriebszustände 2, 3, 4 kann durch einen Programmierer in den Ablauf des Programms der Recheneinheit 120 eingefügt werden, basierend auf dem Wissen über den gesamten Maschinenkontext. Das Konfigurieren der Zeitdauer umfasst ein Festlegen der Zeit, welche zur Verfügung steht, um in jedem spezifischen Service-Betriebszustand 2, 3, 4 eine Service-Operation auszuführen. Jede Service-Operation bedarf einer spezifischen Zeitdauer, welche mit der tatsächlich zur Verfügung gestellten konfigurierten Zeitdauer abgeglichen werden muss. Ist die Zeitdauer zum Ausführen einer Service-Operation größer als die in einem Service-Betriebszustand 2, 3, 4 verfügbare konfigurierbare Zeitdauer, kann die Service-Operation in diesem Service-Betriebszustand 2, 3, 4 nicht ausgeführt werden.

Weiterhin umfasst das System 100 ein verteiltes Rechensystem 130. Das verteilte Rechensystem 130 kann als eine Cloud, bestehend aus einem Rechnerverbund, welcher über das Internet 150 mit der Antriebskomponente 110 verbunden ist, ausgebildet sein. In einer alternativen Ausführungsform kann das verteilte Rechnersystem 130 als ein Rechner ausgebildet sein, welcher lokal vor Ort installiert ist und über ein entsprechendes Netzwerk 150 mit der Antriebskomponente 110 kommuniziert.

Das verteilte Rechensystem 130 umfasst in einer Ausführungsform eine Logging-Vorrichtung 131. Die Logging-Vorrichtung 130 ist ausgebildet, die Zustandsänderungen und die aus der Cloud heraus ausgeführten Service-Operationen zu protokollieren, so dass diese jederzeit zweifelsfrei nachvollziehbar sind.

Über das verteilte Rechensystem 130 werden Service-Operationen bereitgestellt. Vor dem Bereitstellen bzw. Abfragen dieser Service-Operationen muss ein Austausch von Authentisierungs-Informationen zwischen dem verteilten Rechensystem 130 und der Antriebskomponente 110 erfolgen. Diesbezüglich kann die Cyber-Security verbessert werden. Die auf der Antriebskomponente 110 auszuführende Service-Operation fragt zur Ausführung entsprechende Service-Betriebszustände 2, 3, 4 und die konfigurierte Zeitdauer der Service-Betriebszustände 2, 3, 4 ab. Über die Service-Betriebszustände 2, 3, 4 kann gewährleistet werden, dass die Antriebskomponente 110 nicht im operativen Betriebszustand 1 ist, in welchem Menschen und/oder die Maschine gefährdet werden könnten. Über die konfigurierte Zeitdauer wird festgelegt, wie lange der Service-Betriebszustand 2, 3, 4 zur Verfügung steht. Somit kann durch die Service-Operation bestimmt werden, ob in dem zur Verfügung stehenden Service-Betriebszustand 2, 3, 4 das Ausführen der Service-Operation erfolgreich abgeschlossen werden kann. Eine zu geringe zur Verfügung stehende konfigurierte Zeitdauer schließt eine Ausführung der Service-Operation aus. Über die verteilte Recheneinheit 130 werden bei Bedarf und Verfügbarkeit von Service-Betriebszuständen 2, 3, 4 eine Übertragung der Service-Operationen über die Kommunikationsschnittstelle 150, beispielsweise das Internet (IoT) oder Ethernet initialisiert. Zudem wird das Ausführen der Service-Operation überwacht und ggf. analysiert.

In Fig. 1 ist eine Vielzahl an beispielhafter Zustände 1, 2, 3, 4 der Antriebskomponente 110 dargestellt. Bezugszeichen 1 kennzeichnet den operativen Betriebszustand der Antriebskomponente 110, welcher den normalen Zustand, in dem beispielsweise die Antriebskomponente 110 verfahren wird, darstellt. Bezugszeichen 2 kennzeichnet einen ersten beispielhaften Service-Betriebszustand. Der Betriebszustand 1 kann über den Feldbus 140 durch die Steuereinheit 120, beispielsweise eine SPS, über eine Aktion A angewählt werden. Der Service-Betriebszustand 2 kann die Freigabe für ein Firmware-Update umfassen. Der Service-Betriebszustand 2 kann z.B. die Freigabe für ein Firmware-Update der Antriebsrecheneinheit 111 umfassen. Zudem wird ein Authentisierungscode bereitgestellt, welcher durch die Service-Operation zum Updaten der Firmware bestätigt werden muss. Der Authentisierungscode würde in dieser Ausführungsform angeben, welche Rechte eine Applikation in der Recheneinheit 130 besitzen muss, um den Firmware-Update auszuführen. Die Recheneinheit 130 müsste sich mit diesen Rechten gegenüber der Antriebseinheit 110 ausweisen. Zudem wird für den Service-Betriebszustand 2 beispielsweise eine konfigurierte Zeitdauer von 5 Minuten vorgegeben. Innerhalb dieser Zeitdauer kann gewährleistet werden, dass die Antriebskomponente 110 sich in einem spezifischen und bekannten Zustand befindet, in der das Firmwareupdate ausgeführt werden kann. Über eine Aktion B kann der Service-Betriebszustand 2 abgewählt werden. Dies kann automatisch durch Ablauf der konfigurierten Zeitdauer oder durch Abwahl über den Feldbus erfolgen.

Bezugszeichen 3 kennzeichnet einen weiteren beispielhaften Service-Betriebszustand. Der Service-Betriebszustand 3 kann über eine Aktion A beispielsweise durch Anwahl über den Feldbus angewählt werden. In dem Service-Betriebszustand 3 kann eine Freigabe für die Änderungen von Regler-Parametern der Antriebskomponente 110 erfolgen. Eine Freigabe zum Ändern der Regler-Parameter über eine Service-Operation erfolgt nach entsprechender Eingabe eines Autorisierungscodes. Für das Ausführen der Regler-Parameter Änderung kann über die Steuereinheit 120 für den Service-Betriebszustand 3 eine konfigurierte Zeitdauer von 5 Minuten bereitgestellt werden, bevor ein Wechsel B der Antriebskomponente 110 von dem Service-Betriebszustand 3 in den operativen Betriebszustand 1 erfolgt. Zudem kann der Wechsel B durch Abwahl über den Feldbus erfolgen.

Bezugszeichen 4 kennzeichnet eine weiteren beispielhaften Service-Betriebszustand. Der Service-Betriebszustand 4 kann über eine Aktion A, beispielsweise durch Anwahl über den Feldbus, angewählt werden. In dem Service-Betriebszustand 4 kann eine Freigabe für eine Testbewegung der Antriebskomponente 110 erfolgen. Eine Freigabe zum Ändern der Regler-Parameter über eine Service-Operation erfolgt nach entsprechender Eingabe eines Autorisierungscodes. Für das Ausführen der Testbewegung kann über die Steuereinheit 120 für den Service-Betriebszustand 4 eine konfigurierte Zeitdauer von beispielsweise 10 Minuten bereitgestellt werden. Um die Sicherheit für Menschen und Maschine zu gewährleisten, kann über das Anzeige-/Bedienelement eine Betriebsmeldung zur manuellen Zustimmung für das Ausführen der Testbewegung ausgegeben werden. Die erforderliche manuelle Zustimmung kann über ein externes Freigabesignal 170 wie etwa ein manuelles Freigabesignal durch einen Bediener oder alternativ über einen Feldbus übertragenes Freigabesignal bereitgestellt werden.

Fig. 2 zeigt ein Ablaufdiagramm gemäß einer Ausführungsform des erfindungsgemäßen computerimplementierten Verfahrens 10. Das Verfahren 10 umfasst bei der dargestellten Ausführungsform mehrere Schritte. In einem ersten Schritt S1 wird ein Ist-Betriebszustand einer Antriebskomponente 110 erfasst. In einem weiteren Schritt S2 erfolgt ein Anwählen S2 in Abhängigkeit von dem erfassten Ist-Betriebszustand mindestens eines Service-Betriebszustandes 2, 3, 4 für die Antriebskomponente 110 durch eine Steuereinheit 120. In einem weiteren Schritt S3 wird die Administration der Antriebssoftware zum Betreiben der Antriebskomponente 110 in Abhängigkeit von dem angewählten Service-Betriebszustand 2, 3, 4 der Antriebskomponente 110 durch ein verteiltes Rechensystem 130 durchgeführt.

In einer beispielhaften Ausgestaltung soll eine Testbewegung einer Antriebskomponente 110 zur Diagnose des Verhaltens einer Maschine ausgeführt werden. Diese bespielhafte Ausgestaltung stellt keine Beschränkung des erfindungsgemäßen Verfahrens dar, sondern soll dieses an einer praktischen Anwendung verdeutlichen. An die Testbewegung sind folgende Anforderungen gestellt. Die Testbewegung kann für eine reine Maschinen-Diagnose oder als Basis für eine anschließende Optimierung bestimmter Regelungsparameter ausgeführt werden. Hierbei soll die Antriebskomponente 110 eine definierte Testbewegung ausführen. Die dabei generierten Daten zu der definierten Testbewegung werden in einer Speichereinheit in der Antriebskomponente 110 oder in einer externen Speichereinheit gespeichert. Die Antriebskomponente 110 führt eine definiert Testbewegung frei von anderen Maschinenteilen durch. Während der definierten Testbewegung darf keine Gefährdung von Menschen und Maschine vorliegen und/oder auftreten. Zum Durchführen der Testbewegung darf sich die Antriebskomponente 110 nicht im operativen Betriebszustand 1 befinden, damit dessen normaler Betrieb nicht beeinträchtigt wird. Ein eventuell geplanter operativer Betrieb bzw. Betriebszustand sollen nicht verzögert werden. Der Vorgang der Testbewegung soll automatisiert und aus dem verteilten Rechensystem 130, beispielsweise der Cloud, heraus definiert erfolgen. Hierzu entscheidet eine Anwendung (App) in der Cloud, welche Bewegung ausgeführt wird, welche Werte gemessen werden und wie die gewonnenen Daten anschließend verarbeitet werden.

Immer, wenn die Recheneinheit 120 ermittelt, dass die Antriebskomponente 110 für eine bestimmte Zeitdauer nicht benötigt wird, weil beispielsweise die Maschine auf ein neues Werkstück wartet oder eine jeweilige Antriebsachse nicht im Einsatz ist, meldet die Recheneinheit 120, beispielsweise eine Anlagensteuerung, SPS, CNC-Steuerung, über eine Kommunikationsschnittstelle, beispielsweise einen Feldbus, dies an die Antriebskomponente 110. Diese Anwendungen können durch einen Fachmann der Maschine bei der Inbetriebnahme definiert werden. Eine beispielhafte Meldung kann wie folgt ausgebildet sein:
- die geplante Zeitdauer des Zustandes;
- eine Beschreibung der zulässigen Anwendungen, beispielsweise das Schreiben von Parametern, Bewegung der Antriebskomponente 110 in bestimmten Grenzen, Download einer neuen Projektierung in der Antriebskomponente 110, Upgrade der Firmware der Antriebskomponente 110 (Antriebsrecheneinheit 111) bzw. der Rechte die einem potentiellen Nutzer aus der Cloud gewährt werden;
- einen Autorisierungs-Code, der angibt, welche Nutzerrollen einen bestimmten Service-Betriebszustand verwenden dürfen, beispielsweise OEM-Service, Siemens-Service.

Die Recheneinheit 120 kann diese Meldung auf Grund ihrer Kenntnis über den gesamten Maschinen-Zustand generieren. Die Antriebskomponente 110 kann dies aus ihrer Sicht nicht, da diese nicht den gesamten Maschinenkontext kennt. Die Antriebskomponente 110 empfängt diese Meldung und geht in einen Unterzustand (Service-Betriebszustand) über. Dieser umfasst, dass die Antriebskomponente 110 in Regelung und bereit verbleibt, die Kommandohoheit an eine Cloud-Anwendung (App) abzugeben. Die Antriebskomponente 110 meldet dies an das verteilte Rechensystem 130 (Cloud). Die Cloud-Anwendung empfängt die Meldung der Antriebskomponente 110. Aus der Historie des letzten Service-Intervalls kann die Cloud-App entscheiden, dass wieder eine Maschinendiagnose durchzuführen ist und, dass die zur Verfügung stehende Zeit ausreichend ist und übernimmt die Kommandohoheit über die Antriebkomponente 110 bzw. den Antrieb. Die Cloud-App gibt Kommandos an die Antriebskomponente 110, welche die Art der Testbewegung vorgeben und die aufzuzeichnenden Signale selektieren. Anschließend erfolgt ein Triggern der Testbewegung. An dieser Stelle ist auch die Abfrage einer zusätzlichen Zustimmungseingabe durch einen lokalen Fachmann (vor Ort an der Antriebskomponente 110) denkbar. Die Antriebskomponente 110 führt die Testbewegung aus und zeichnet dabei eine Auswahl von Signalquellen auf. Nach Ablauf des Zeitfensters (konfigurierte Zeitdauer) fällt die Antriebskomponente 110 automatisch in den operativen Betriebszustand 1 (vor der Meldung der Recheneinheit 120) zurück. Die aufgezeichneten Daten können während des laufenden Betriebes im Hintergrund an die Cloud übermittelt und gespeichert werden. Eine Anwendung in der Cloud wertet die aufgezeichneten Daten aus.

Zusammenfassend betrifft die Erfindung ein System und ein Verfahren zur Administration von Antriebskomponenten 110. Das System umfasst mindestens eine Antriebskomponente 110 mit einer Antriebsrecheneinheit 111. Auf der Antriebsrecheneinheit 111 ist eine Antriebs-Software zum Betreiben der Antriebskomponente 110 ausführbar durch die Antriebsrecheneinheit 111 gespeichert. Weiterhin weist das System eine Recheneinheit 120 in Kommunikation mit der Antriebsrecheneinheit 111 der Antriebskomponente 110 auf. Die Recheneinheit 120 ist konfiguriert, einen Ist-Betriebszustand der Antriebskomponente 110 und ihres Maschinen- bzw. Anlagenkontextes zu erfassen und in Abhängigkeit des erfassten Ist-Betriebszustand 1 mindestens einen Service-Betriebszustand 2, 3, 4 für die Antriebskomponente 110 anzuwählen. Zudem umfasst das System ein verteiltes Rechensystem 130 in Kommunikation mit der Antriebsrecheneinheit 111 der Antriebskomponente 110, das konfiguriert ist, in Abhängigkeit des angewählten Service-Betriebszustand 2, 3, 4 der Antriebskomponente 110, ein Durchführen der Administration der Antriebskomponente 110 auszulösen.

Hierdurch kann ein einzuhaltender Ablauf definiert werden, der sicherstellt, dass keine Beeinträchtigung des operativen Betriebes oder Gefährdung von Menschen oder Maschine während der Administration auftreten kann.

## Patentansprüche

1. System (100) zur Administration von Antriebskomponenten (110), umfassend:
- mindestens eine Antriebskomponente (110) mit einer Antriebsrecheneinheit (111), wobei auf der Antriebsrecheneinheit (111) eine Antriebs-Software ausführbar durch die Antriebsrecheneinheit (111) gespeichert ist;
- mindestens eine Recheneinheit (120) in Kommunikation (140) mit der Antriebsrecheneinheit (111) der Antriebskomponente (110), die konfiguriert ist, einen Ist-Betriebszustand der Antriebskomponente (110) zu erfassen und in Abhängigkeit von dem erfassten Ist-Betriebszustand (1) mindestens einen Service-Betriebszustand (2, 3, 4) für die Antriebskomponente (110) anzuwählen;
- ein verteiltes Rechensystem (130) in Kommunikation (150) mit der Antriebsrecheneinheit (111) der Antriebskomponente (110), das konfiguriert ist, in Abhängigkeit von dem angewählten Service-Betriebszustand der Antriebskomponente (110) ein Durchführen der Administration der Antriebskomponente (110) auszulösen,
**dadurch gekennzeichnet, dass**
die Antriebs-Software zum Betreiben der Antriebskomponente (110) gespeichert ist, wobei
das Administrieren der Antriebskomponente (110) Service-Operationen an der Antriebs-Software zum Betreiben der Antriebskomponente (110) umfasst , wobei die Service-Operationen während
des angewählten Service-Betriebszustands ausgeführt werden, wobei
der angewählte Service-Betriebszustand (2, 3, 4) konfiguriert ist, eine konfigurierbare Zeitdauer anzudauern und die konfigurierbare Zeitdauer angibt, wann ein Wechsel aus dem Service-Betriebszustand (2, 3, 4) der Antriebskomponente (110) in den operativen Betriebszustand (1) der Antriebskomponente (110) erfolgt.

2. System (100) nach Anspruch 1, das so konfiguriert ist, dass der mindestens eine Service-Betriebszustand einen spezifischen und bekannten Zustand der Antriebskomponente (110) umfasst, der nicht einem operativen Betriebszustand (1) der Antriebskomponente (110) entspricht, wobei über den Service-Betriebszustand garantiert ist, dass eine Service-Operation freigegeben und durchgeführt werden kann.

3. System (100) nach einem der vorherigen Ansprüche 1 und 2, das so konfiguriert ist, dass das Administrieren der Antriebskomponente (110) Service-Operationen zur Inbetriebnahme/Wartung der Antriebskomponente (110) umfasst.

4. System (100) nach einem der vorherigen Ansprüche 1 bis 3, das so konfiguriert ist, dass die Service-Operationen über das verteilte Rechensystem (130) abgefragt und bereitgestellt werden.

5. System (100) nach einem der vorherigen Ansprüche 1 bis 4, das so konfiguriert ist, dass die Recheneinheit (120) als eine speicherprogrammierbare Steuerung (SPS) oder als eine computergestützte numerische Steuerung (CNC) ausgebildet ist.

6. System (100) nach einem der vorherigen Ansprüche 1 bis 5, das so konfiguriert ist, dass für den Service-Betriebszustand (2, 3, 4) Authentifikations-Anforderungen zur Zugriffsteuerung auf die Antriebsrecheneinheit (111) der Antriebskomponente (110) über die Recheneinheit (120) bereitgestellt und von dem verteilten Rechensystem (130) für den Zugriff abgefragt werden.

7. System (100) nach Anspruch 6, das so konfiguriert ist, dass den Authentifikations-Anforderungen Anwenderrollen zugeordnet sind, welche den Zugriff auf die Antriebsrecheneinheit (111) der Antriebskomponente (110) entsprechend der Rolle freischalten.

8. System (100) nach einem der vorherigen Ansprüche 1 bis 7, das so konfiguriert ist, dass auf einem Anzeige-/Bedienelement (160) eine Betriebsmeldung ausgegeben wird, wenn der Ist-Betriebszustand (1) der Antriebskomponente (110) keine Anwahl eines Service-Betriebszustand (2, 3, 4) für die Antriebskomponente (110) ermöglicht.

9. System (100) nach einem der vorherigen Ansprüche 2 bis 7, das so konfiguriert ist, dass durch Anwahl über ein externes Eingabesignal (170) ein Wechsel aus dem operativen Betriebszustand (1) in den Service-Betriebszustand (2, 3, 4) erfolgt.

10. System (100) nach einem der vorherigen Ansprüche 1 bis 9, das so konfiguriert ist, dass das verteilte Rechensystem (130) eine Logging-Vorrichtung (131) zum Protokollieren einer Zustandsänderung und/oder einer Service-Operation aufweist.

11. Verfahren (10) zur Administration von Antriebskomponenten (110) mit einer Antriebsrecheneinheit (111), wobei auf der Antriebsrecheneinheit (111) eine Antriebssoftware zum Betreiben der Antriebskomponente (110) ausführbar durch die Antriebsrecheneinheit (110) gespeichert ist, mit den Schritten:
- Erfassen (S1) eines Ist-Betriebszustand (1) einer Antriebskomponente (110) und Anwählen (S2), in Abhängigkeit von dem erfassten Ist-Betriebszustand (1) mindestens eines Service-Betriebszustand (2, 3, 4) für die Antriebskomponente (110) durch eine Steuereinheit (120);
- Durchführen (S3) der Administration der Antriebssoftware zum Betreiben der Antriebskomponente (110), in Abhängigkeit von dem angewählten Service-Betriebszustand (2, 3, 4) der Antriebskomponente (110) durch ein verteiltes Rechensystem (130),
**dadurch gekennzeichnet, dass**
das Administrieren der Antriebskomponente (110) Service-Operationen an der Antriebs-Software zum Betreiben der Antriebskomponente (110) umfasst , wobei die Service-Operationen während
des angewählten Service-Betriebszustands ausgeführt werden, wobei
der angewählte Service-Betriebszustand (2, 3, 4) eine konfigurierbare Zeitdauer andauert und die konfigurierbare Zeitdauer angibt, wann ein Wechsel aus dem Service-Betriebszustand (2, 3, 4) der Antriebskomponente (110) in den operativen Betriebszustand (1) der Antriebskomponente (110) erfolgt.

## Claims

1. System (100) for administering drive components (110), comprising:
- at least one drive component (110) having a drive computing unit (111), wherein drive software is stored on the drive computing unit (111) such that it can be executed by the drive computing unit (111);
- at least one computing unit (120) in communication (140) with the drive computing unit (111) of the drive component (110), which is configured to detect an actual operating state of the drive component (110) and to select at least one service operating state (2, 3, 4) for the drive component (110) according to the detected actual operating state (1);
- a distributed computing system (130) in communication (150) with the drive computing unit (111) of the drive component (110), which is configured to trigger administration of the drive component (110) according to the selected service operating state of the drive component (110),
**characterised in that**
the drive software is stored for the operation of the drive component (110), wherein
the administration of the drive component (110) comprises service operations on the drive software for operating the drive component (110), wherein the service operations are executed during the selected service operating state, wherein the selected service operating state (2, 3, 4) is configured to last for a configurable time period and indicates the configurable time period when there is a change from the service operating state (2, 3, 4) of the drive component (110) to the operative operating state (1) of the drive component (110).

2. System (100) according to claim 1, which is configured such that the at least one service operating state comprises a specific and known state of the drive component (110) that does not correspond to an operative operating state (1) of the drive component (110), wherein the service operating state guarantees that a service operation can be released and performed.

3. System (100) according to one of the preceding claims 1 and 2, which is configured such that the administration of the drive component (110) comprises service operations for commissioning/maintaining the drive component (110).

4. System (100) according to one of the preceding claims 1 to 3, which is configured such that the service operations are queried and provided via the distributed computing system (130).

5. System (100) according to one of the preceding claims 1 to 4, which is configured such that the computing unit (120) is embodied as a programmable logic control (SPS) or as a computerised numerical control (CNC).

6. System (100) according to one of the preceding claims 1 to 5, which is configured such that authentication requirements for access control to the drive computing unit (111) of the drive component (110) for the service operating state (2, 3, 4) are provided via the computing unit (120) and queried by the distributed computing system (130) for access.

7. System (100) according to claim 6, which is configured such that user roles that enable access to the drive computing unit (111) of the drive component (110) according to the role are assigned to the authentication requirements.

8. System (100) according to one of the preceding claims 1 to 7, which is configured such that an operational message is output on a display/operating element (160) if the actual operating state (1) of the drive component (110) does not enable selection of a service operating state (2, 3, 4) for the drive component (110).

9. System (100) according to one of the preceding claims 2 to 7, which is configured such that a change from the operative operating state (1) to the service operating state (2, 3, 4) is effected by selection via an external input signal (170).

10. System (100) according to one of the preceding claims 1 to 9, which is configured such that the distributed computing system (130) has a logging apparatus (131) for logging a state change and/or a service operation.

11. Method (10) for administering drive components (110) having a drive computing unit (111), wherein drive software for operating the drive component (110) is stored on the drive computing unit (111) such that it can be executed by the drive computing unit (110), with the steps:
- detecting (S1) an actual operating state (1) of a drive component (110) and selecting (S2) at least one service operating state (2, 3, 4) for the drive component (110) according to the detected actual operating state (1) by means of a control unit (120);
- administering (S3) the drive software for operating the drive component (110) according to the selected service operating state (2, 3, 4) of the drive component (110) by means of a distributed computing system (130),
**characterised in that**
the administration of the drive component (110) comprises service operations on the drive software for operating the drive component (110), wherein the service operations are executed during the selected service operating state, wherein the selected service operating state (2, 3, 4) lasts for a configurable time period and indicates the configurable time period when there is a change from the service operating state (2, 3, 4) of the drive component (110) to the operative operating state (1) of the drive component (110).

## Revendications

1. Système (100) d'administration de composants (110) d'entraînement, comprenant :
- au moins un composant (110) d'entraînement ayant une unité (111) informatique d'entraînement, dans lequel sur l'unité (111) informatique d'entraînement est mis en mémoire un logiciel d'entraînement pouvant être exécuté par l'unité (111) informatique d'entraînement ;
- au moins une unité (120) informatique en communication (140) avec l'unité (111) informatique d'entraînement du composant (110) d'entraînement, qui est configurée pour détecter un état de fonctionnement réel du composant (110) d'entraînement et pour sélectionner, en fonction de l'état (1) de fonctionnement réel détecté, au moins un état (2, 3, 4) de fonctionnement de service pour le composant (110) d'entraînement ;
- un système (130) informatique réparti en communication (150) avec l'unité (111) informatique d'entraînement du composant (110) d'entraînement, qui est configuré pour déclencher, en fonction de l'état de fonctionnement de service sélectionné du composant (110) d'entraînement, une exécution de l'administration du composant (110) d'entraînement,
**caractérisé en ce que**
le logiciel d'entraînement pour le fonctionnement du composant (110) d'entraînement est mis en mémoire, dans lequel l'administration du composant (110) d'entraînement comprend, pour le fonctionnement du composant (110) d'entraînement des opérations de service sur le logiciel d'entraînement,
dans lequel les opérations de service sont exécutées pendant l'état de fonctionnement de service sélectionné,
dans lequel
l'état (2, 3, 4) de fonctionnement de service sélectionné est configuré pour durer une durée configurable et la durée configurable indique quand un changement de l'état (2, 3, 4) de fonctionnement de service du composant (110) d'entraînement à l'état (1) de fonctionnement opératoire du composant (110) d'entraînement a lieu.

2. Système (100) suivant la revendication 1, qui est configuré de manière à ce que
le au moins un état de fonctionnement de service détecte un état spécifique et connu du composant (110) d'entraînement, qui ne correspond pas à un état (1) de fonctionnement opératoire du composant (110) d'entraînement, dans lequel, par l'état de fonctionnement de service, il est garanti qu'une opération de service peut être validée et effectuée.

3. Système (100) suivant l'une des revendications 1 et 2 précédentes, qui est configuré de manière à ce que
l'administration du composant (110) d'entraînement comprenne des opérations de service pour la mise en fonctionnement/l'entretien du composant (110) d'entraînement.

4. Système (100) suivant l'une des revendications 1 à 3 précédentes, qui est configuré de manière à ce que
les opérations de service soient demandées et mises à disposition par le système (130) informatique réparti.

5. Système (100) suivant l'une des revendications 1 à 4 précédentes, qui est configuré de manière à
constituer l'unité (120) informatique sous la forme d'un automate (SPS) programmable ou sous la forme d'une commande (CNC) numérique assistée par ordinateur.

6. Système (100) suivant l'une des revendications 1 à 5, qui est configuré de manière à ce que,
pour l'état (2, 3, 4) de fonctionnement de service, des demandes d'authentification pour la commande d'accès à l'unité (111) informatique d'entraînement du composant (110) d'entraînement, soient mises à disposition par l'unité (120) informatique et soient demandées pour l'accès par le système (130) informatique réparti.

7. Système (100) suivant la revendication 6, qui est configuré de manière à ce qu'
aux demandes d'authentification, soient affectés des rôles d'utilisateur, qui valident conformément au rôle l'accès à l'unité (111) informatique d'entraînement du composant (110) d'entraînement.

8. Système (100) suivant l'une des revendications 1 à 7 précédentes, qui est configuré de manière à
envoyer sur un élément (160) d'affichage/commande un message de fonctionnement, si l'état (1) de fonctionnement réel du composant (110) d'entraînement rend impossible une sélection d'un état (2, 3, 4) de fonctionnement de service pour le composant (110) d'entraînement.

9. Système (100) suivant l'une des revendications 2 à 7 précédentes, qui est configuré de manière à ce que,
par la sélection par un signal (170) extérieur d'entrée, un changement de l'état (1) de fonctionnement opératoire à l'état (2, 3, 4) de fonctionnement de service a lieu.

10. Système (100) suivant l'une des revendications 1 à 9 précédentes, qui est configuré de manière à ce que
le système (130) informatique réparti a un dispositif (131) de logging pour consigner une variation d'état et/ou une opération de service.

11. Procédé (10) d'administration de composants (110) d'entraînement ayant une unité (111) informatique d'entraînement, dans lequel sur l'unité (111) informatique d'entraînement est mis en mémoire un logiciel d'entraînement pouvant, pour l'entraînement des composants (110) d'entraînement, être exécuté par l'unité (110) informatique d'entraînement, comprenant les stades :
- détection (S1) d'un état (1) de fonctionnement réel d'un composant (110) d'entraînement et sélection (S2), par une unité (120) de commande, en fonction de l'état (1) de fonctionnement réel détecté, d'au moins un état (2, 3, 4) de fonctionnement de service pour le composant (110) d'entraînement ;
- exécution (S3) par un système (130) informatique réparti de l'administration du logiciel d'entraînement pour faire fonctionner le composant (110) d'entraînement, en fonction de l'état (2, 3, 4) de fonctionnement de service sélectionné du composant (110) d'entraînement,
**caractérisé en ce que**
l'administration du composant (110) d'entraînement comprend des opérations de service sur le logiciel d'entraînement pour le fonctionnement du composant (110) d'entraînement,
dans lequel les opérations de service sont exécutées pendant l'état de fonctionnement de service sélectionné,
dans lequel
l'état (2, 3, 4) de fonctionnement de service sélectionné dure une durée configurable et la durée configurable indique quand un changement de l'état (2, 3, 4) de fonctionnement de service du composant (110) d'entraînement à l'état (1) de fonctionnement opératoire du composant (110) d'entraînement a lieu.
